# EUROPEAN PATENT APPLICATION

(11) **EP 3 170 699 A1**
(43) Date of publication of application: **24.05.2017**
(21) Application number: 15821779.4
(22) Date of filing: 07.07.2015
(51) Int. Cl.: B60R 1/04, B60K 35/00, B60R 1/00, B60R 11/02

(54) **ELECTRON MIRROR DEVICE**

(30) Priority: 14.07.2014 JP 2014143822
(71) Applicant: Panasonic Intellectual Property Management Co., Ltd., Osaka-shi, Osaka 540-6207 (JP)
(72) Inventor: NAKAI, Wataru, Osaka-shi, Osaka 540-6207 (JP); OKOHIRA, Takashi, Osaka, Osaka-shi 540-6207 (JP); NAKAI, Jun, Osaka, Osaka-shi 540-6207 (JP)
(74) Representative: Schwabe - Sandmair - Marx
(86) International application number: PCT/JP2015/003397
(87) International publication number: WO 2016/009612

(57) **Abstract**

The electronic mirror device has a display unit and a control unit. The display unit, which is disposed on the mounting position of the rearview mirror of a vehicle, displays the image captured by a camera mounted on the vehicle. The control unit controls the display unit. The display unit contains an image display section having a display surface, and a half mirror disposed facing the display surface of the image display section. When the control unit determines that the image display section is turned off, it lights up an illuminator disposed in the vehicle interior.

## Description

### BACKGROUND OF THE INVENTION

### TECHNICAL FIELD

The present invention relates to an electronic mirror device having a half mirror and an image display section.

### BACKGROUND ART

In a conventional electronic mirror device having a half mirror and an image display section, there is a known technique in which the angle of the half mirror can be varied so that an image behind the vehicle cannot be seen on the half mirror when the driver needs to see the image display section (for example, see Patent Literature 1). The angle setting of the half mirror enhances visibility of the image display section.

### Citation List

### Patent Literature

PTL 1: Japanese Unexamined Patent Application Publication No. 2014-15198

### SUMMARY OF THE INVENTION

The present invention provides an electronic mirror device having enhanced visibility in the vehicle interior seen through a half mirror.

The electronic mirror device of the present invention has a display unit and a control unit. The display unit, which is disposed on the mounting position of the rearview mirror in the interior of a vehicle, displays an image captured by a camera mounted on the vehicle. The control unit controls the display unit. The display unit contains an image display section having a display surface and a half mirror that is disposed facing the display surface of the image display section. The control unit lights up an illuminator disposed in the interior of the vehicle when the image display section is turned off.

The aforementioned illuminator disposed in the interior of the vehicle includes not only an illuminator that has already been disposed in the interior of the vehicle but also an illuminator to be disposed in the interior together with the electronic mirror device.

According to the present invention, when the driver needs to check the interior of the vehicle through the half mirror, the control unit turns off image display of the image display section and lights up the illuminator disposed in the interior of the vehicle. This enhances visibility in the interior of the vehicle seen through the half mirror.

### BRIEF DESCRIPTION OF DRAWINGS

FIG. 1 is a front view showing the interior of the vehicle having the electronic mirror device in accordance with an exemplary embodiment of the present invention.
FIG. 2 is a plan view of the vehicle shown in FIG. 1.
FIG. 3 is a side perspective view of the vehicle shown in FIG. 1.
FIG. 4 is a front view of the display unit of the electronic mirror device in accordance with the exemplary embodiment of the present invention.
FIG. 5 is a cross-section view of the display unit shown in FIG. 4.
FIG. 6 is a control block diagram of the electronic mirror device in accordance with the exemplary embodiment of the present invention.
FIG. 7 is a flowchart showing an example of operation of the electronic mirror device in accordance with a first exemplary embodiment of the present invention.

### DESCRIPTION OF EMBODIMENT

Prior to description of the exemplary embodiment of the present invention, problems in a conventional electronic mirror device will be described briefly.

In the conventional electronic mirror device having a half mirror and an image display section, the structure does not put weight on the visibility of the half mirror. For example, suppose that the driver switches from display on the image display section to display on the half mirror to check the condition of the interior of the vehicle such as the condition of a child sitting on the back seat. The image display section shows the outside of the vehicle captured by the camera, whereas the half mirror shows not only the outside of the vehicle through the rearview mirror but also the interior of the vehicle. The driver can check the interior of the vehicle through the half mirror.

However, compared to an ordinary mirror, a half mirror shows image with lower luminance. In particular, in a dark interior, for example, at nighttime, the visibility in the interior of the vehicle through the half mirror can become impaired.

Hereinafter, an example in which the electronic mirror device of the exemplary embodiment of the present invention is mounted on a vehicle will be described with reference to the drawings.

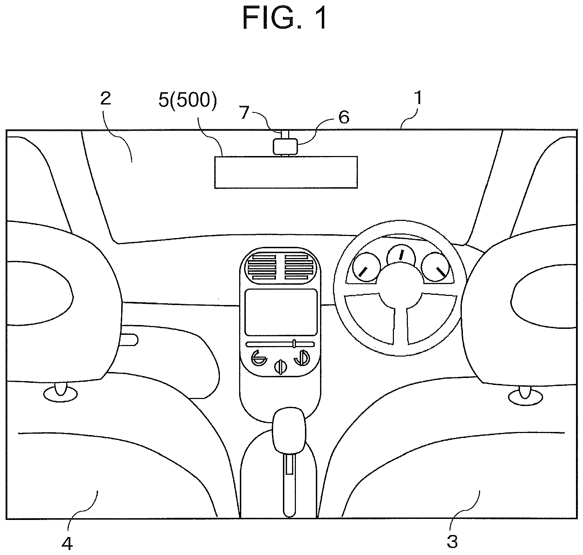

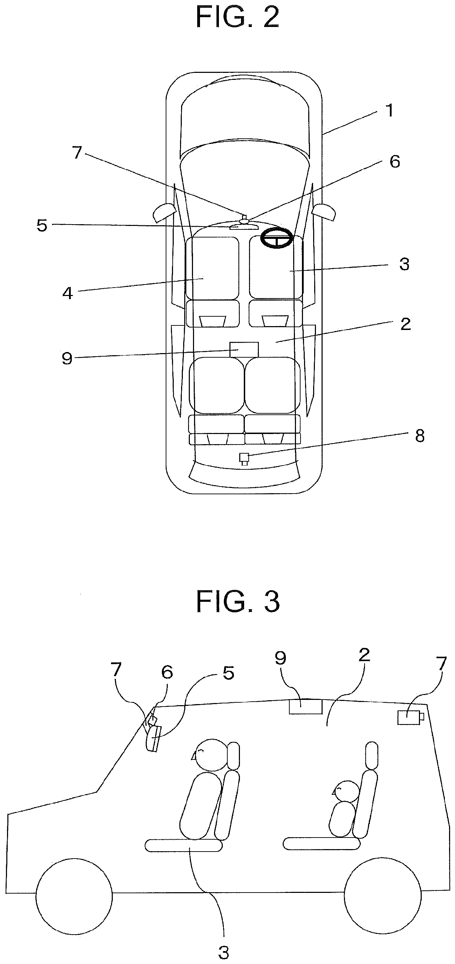

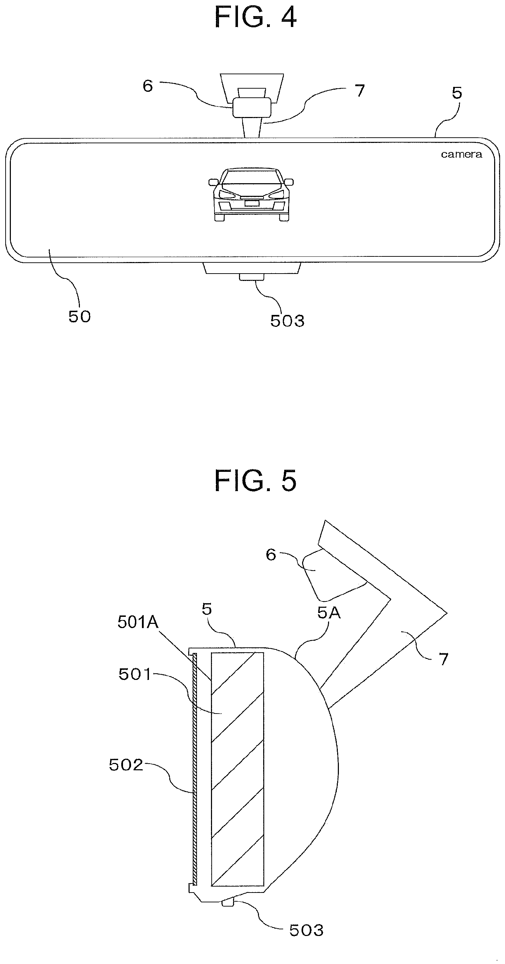

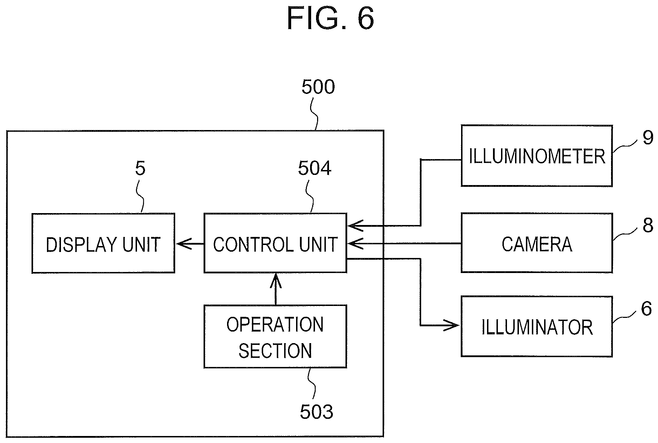

FIG. 1 is a front view of interior 2 of vehicle 1 on which electronic mirror device 500 of the exemplary embodiment of the present invention is mounted. FIG. 2 is a plan view of vehicle 1 and FIG. 3 is a side perspective view of vehicle 1. FIG. 4 is a front view of display unit 5 of electronic mirror device 500 and FIG. 5 is a cross-section view of electronic mirror device 500. FIG. 6 is a control block diagram of electronic mirror device 500.

As shown in FIG. 1 through FIG. 3, in a front section between driver seat 3 and passenger seat 4 in interior 2 of vehicle 1, display unit 5 forming the electronic mirror device is attached to the mounting position of the rearview mirror so as to be movable on fixing part 7. Camera 8 is disposed at the rear of the vehicle.

Display unit 5 has case 5A, liquid crystal display 501 as the image display section, half mirror 502, and operation section 503. Case 5A has an opening on the side of the driver seat, as shown in FIG. 5. Liquid crystal display 501 is disposed in the opening of case 5A such that display surface 501A faces toward the driver seat. Half mirror 502 is disposed closer to the driver seat than liquid crystal display 501. The driver can turn on/off liquid crystal display 501 by operating operation section 503. Display unit 5 contains liquid crystal display 501 having display surface 501A and half mirror 502 that is disposed facing display surface 501A of liquid crystal display 501.

Image 50 shown in display unit 5, as shown in FIG. 4, can be switched, by operating operation section 503, between the display of liquid crystal display 501 (as the image display section) and the display of half mirror 502. When the display of liquid crystal display 501 is selected, display unit 5 displays an image of an area behind the vehicle captured by camera 8. When the display of half mirror 502 is selected, liquid crystal display 501 is turned off and display unit 5 displays a reflection image reflected off half mirror 502.

To provide visibility in the rear of vehicle interior 2, illuminator 6 is disposed on a ceiling side of display unit 5 so as to light up the rear of interior 2. Illuminator 6 is fixed to fixing part 7 disposed on the ceiling side of display unit 5. Illuminator 6 is a spotlight for lighting up a particular area, i.e., the rear seats of vehicle interior 2.

As shown in FIG. 6, display unit 5 is connected to control unit 504. Control unit 504 is connected to operation section 503, camera 8, illuminator 6, and illuminometer 9 for measuring illumination level in the rear of vehicle interior 2.

Control unit 504 controls display unit 5, operation section 503, camera 8, illuminometer 9, and illuminator 6. Specifically, control unit 504 turns on/off liquid crystal display 501 of display unit 5; it detects the presence or absence of operation on operation section 503; it receives the image captured by camera 8 and outputs it to display unit 5; it determines the workings of the sections above according to an output value from illuminometer 9; and it turns on/off illuminator 6.

Control unit 504 has a CPU (Central Processing Unit) that is an operation controller, ROM (Read Only Memory) for storing control programs, and RAM (Random Access Memory) for storing temporary data and control data.

An example of major operation of electronic mirror device 500 with the structure above will be described.

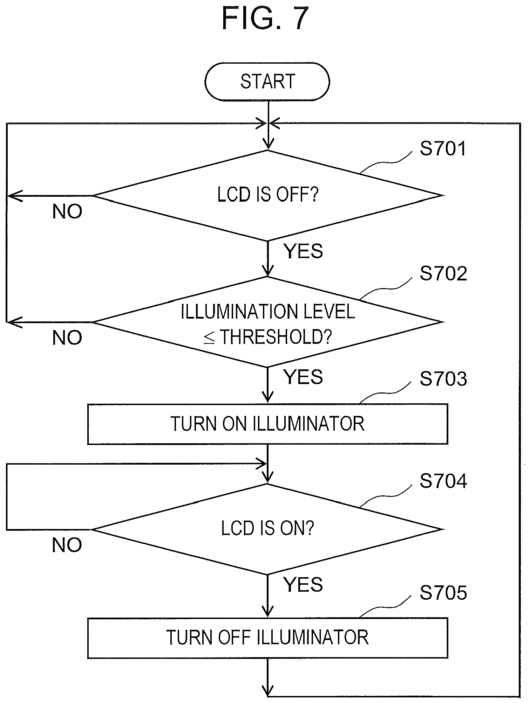

FIG. 7 is a flowchart showing an example of the major operation of electronic mirror device 500.

Upon the start of the process, control unit 504 of electronic mirror device 500 determines whether liquid crystal display 501 is turned off or not, that is, control unit 504 determines whether display unit 5 shows the display of half mirror 502 or not (in step S701). If control unit 504 determines that liquid crystal display 501 is not turned off (corresponding to 'NO' in step S701), the determination of step S701 is repeated until control unit 504 determines that liquid crystal display 501 is turned off.

If control unit 504 determines that liquid crystal display 501 is turned off (corresponding to 'YES' in step S701), control unit 504 further determines whether or not the illumination level in the rear section of vehicle interior 2 is equal to or lower than a predetermined value (threshold) based on the measurement value of illuminometer 9 (in step S702).

If control unit 504 determines that the illumination level is not equal to nor lower than the predetermined value (corresponding to 'NO' in step S702), the procedure goes back to step S701. If control unit 504 determines that the illumination level is equal to or lower than the predetermined value (corresponding to 'YES' in step S702), control unit 504 lights up illuminator 6 (in step S703). Illuminator 6 is a spotlight for lighting up a particular area. Lighting up illuminator 6 provides visibility in the rear section of vehicle interior 2 through half mirror 502.

After lighting up illuminator 6, control unit 504 determines whether or not liquid crystal display 501 is turned on, that is, determines whether or not display unit 5 shows the display of liquid crystal display 501 (in step S704). If control unit 504 determines that an image is not displayed on liquid crystal display 501 (corresponding to 'NO' in step S704), that is, while display unit 5 is displaying the display of half mirror 502, control unit 504 maintains the on state of illuminator 6.

If control unit 504 determines that an image is displayed on liquid crystal display 501 (corresponding to 'YES' in step S704), control unit 504 turns off illuminator 6 (in step S705). Turning off illuminator 6 allows half mirror 502 to have no reflection of light from illuminator 6, which provides visibility of liquid crystal display 501. After illuminator 6 is turned off, the procedure goes back to step S701.

According to electronic mirror device 500, as described above, if control unit 504 determines that liquid crystal display 501 is turned off, control unit 504 turns on illuminator 6 disposed in vehicle interior 2. That is, when the driver needs to check vehicle interior 2 through half mirror 502, turning on illuminator 6 improves the visibility in vehicle interior 2.

In the description, illuminator 6 is disposed closer to the ceiling than display unit 5, but it is not limited to. When vehicle interior 2 already has an illuminator that lights up vehicle interior 2; particularly, the rear section of vehicle interior 2, the illuminator may be turned on. In that case, the structure has no need of an additional illuminator and effectively uses the existing lighting.

Further, illuminator 6 may always be turned on in response to turning off of liquid crystal display 501, i.e., not based on illuminometer 9. The structure improves the visibility of the half mirror with reliability with no use of illuminometer 9.

### INDUSTRIAL APPLICABILITY

The electronic mirror device of the present invention is useful for an on-vehicle monitoring device.

### REFERENCE MARKS IN THE DRAWINGS

- 1:: vehicle
- 2:: vehicle interior
- 5:: display unit
- 6:: illuminator
- 7:: fixing part
- 8:: camera
- 9:: illuminometer
- 5A:: case
- 500:: electronic mirror device
- 501:: liquid crystal display
- 501A:: display surface
- 502:: half mirror
- 503:: operation section
- 504:: control unit

## Claims

1. An electronic mirror device comprising:
a display unit that is disposed on a mounting section of a rearview mirror in an interior of a vehicle and displays an image captured by a camera mounted on the vehicle, the display unit including:
an image display section having a display surface; and
a half mirror disposed facing the display surface of the image display section; and
a control unit that controls the display unit,
wherein the control unit lights up an illuminator disposed in the interior of the vehicle if the image display section is turned off.

2. The electronic mirror device according to claim 1 further comprising:
an illuminometer connected to the control unit,
wherein the control unit lights up the illuminator if an illumination level in a rear section of the interior of the vehicle measured by the illuminometer is equal to or lower than a predetermined value.

3. The electronic mirror device according to claim 1 or claim 2,
wherein the illuminator provides visibility in the rear section of the interior of the vehicle.

4. The electronic mirror device according to any of claim 1 through claim 3,
wherein the illuminator is disposed on a side of a ceiling of the vehicle with respect to the display unit and lights up the rear section of the interior of the vehicle.
